# EUROPÄISCHE PATENTSCHRIFT

(11) **EP 4 200 377 B1**
(45) Veröffentlichungstag und Bekanntmachung des Hinweises auf die Patenterteilung: **26.06.2024**
(21) Anmeldenummer: 21801424.9
(22) Anmeldetag: 17.08.2021
(51) Int. Cl.: C09J 163/00

(54) **KLEBSTOFFFORMULIERUNG ZUR HERSTELLUNG VON PRESSSTOFF-FORMKÖRPERN**
ADHESIVE FORMULATION FOR PRODUCING PRESSED MATERIAL MOLDED BODIES
FORMULATION D'ADHÉSIF POUR LA FABRICATION DE CORPS MOULÉS EN MATIÈRE À MOULER PAR COMPRESSION

(30) Priorität: 18.08.2020 AT 506952020
(43) Veröffentlichungstag der Anmeldung: 28.06.2023
(73) Patentinhaber: Lignom Holding S.à r.l., 1511 Luxembourg (LU)
(72) Erfinder: MIKOWITSCH, Herbert, 2340 Mödling (AT)
(74) Vertreter: Burger, Hannes
(86) Internationale Anmeldenummer: PCT/EP2021/072779
(87) Internationale Veröffentlichungsnummer: WO 2022/038109

(56) Entgegenhaltungen:
- JP-A- H06 172 733
- JP-A- 2004 231 814
- Evonik: "Product information ANQUAMINE 728 Waterborne Curing Agent", , 11. Februar 2020 (2020-02-11), XP055880671, Gefunden im Internet: URL:https://web.archive.org/web/2021030113 2809/https://crosslinkers-web.panpage.de/e n2/crosslinkers/anquamine/usa/anquamine_72 8_us.pdf [gefunden am 2022-01-18]

## Beschreibung

Die Erfindung betrifft eine chemisch härtbare, wässrige 2-Komponenten-Klebstoffformulierung zur Herstellung von Pressstoff-Formkörpern, insbesondere Pressstoff-Platten, sowie Verfahren zur Herstellung von Pressstoff-Formkörpern, insbesondere Pressstoff-Platten durch kontinuierliches oder diskontinuierliches Verpressen von Gemengen aus der Klebstoffformulierung und Span- bzw. Fasermaterial oder durch Verpressen von Schichtungen aus der Klebstoffformulierung und Span- bzw. Faserstoff-Platten.

Unter dem Begriff Pressstoff-Formkörper wird ganz generell ein Formkörper verstanden, welcher durch Fügen von Span- und/oder Fasermaterial umfassenden Werkstoffen unter Härtung einer beigemengten Klebstoffformulierung, unter Beaufschlagung mit einem Pressdruck und gegebenenfalls unter Erhitzung zu dem Pressstoff-Formkörper geformt wird. Die weitaus häufigste Anwendung solcher Formkörper ist hierbei in Form von Platten. Unter den Begriff Pressstoff-Formkörper fallen demnach zum Beispiel Spanplatten, insbesondere Grobspann-Platten (auch als OSB-Platten bezeichnet), mitteldichte (Holz)faserplatten (sogenannte MDF-Platten), hochdichte (Holz)faserplatten (sogenannte HDF-Platten), aber auch geschichtete bzw. schichtgefügte Plattenstrukturen, wie etwa Furnierschichtholz-Platten.

Demgemäß umfasst der Begriff Span- bzw. Fasermaterial ganz allgemein Materialien, welche Fasern, wie etwa Holz- bzw. Cellulosefasern inklusive Fasern aus Altpapier, anderes Recycling-Material wie Abfälle aus Sägewerken oder recyceltes Bauholz, andere natürlich vorkommende Fasern, wie etwa Stroh, Bambus etc., aber auch synthetische Fasern, etwa Polyesterfasern, aufweisen. Selbstverständlich fallen unter den Begriff Span- bzw. Fasermaterial auch Materialien umfassend Mischungen aus Fasern unterschiedlicher Natur. Das Span- bzw. Fasermaterial kann hierbei durchaus unterschiedliche Formen und Zerkleinerungsgrade aufweisen. So kann das Span- bzw. Fasermaterial bereits in ausgeformter Form, also als Faserverbund-Körper vorliegen, wie etwa bei den oben erwähnten Furnier-Schichtplatten. Das Span- bzw. Fasermaterial kann aber auch in mehr oder weniger loser Form mit unterschiedlichen Mahlgraden bereitgestellt sein, wie etwa mit einem verhältnismäßig geringem Mahlgrad als sogenannter Span wie bei den oben erwähnten Span- oder OSB-Platten, oder aber auch in loser Form mit verhältnismäßig hohem Mahlgrad, wie zum Beispiel als aufgeschlossenes, sogenanntes Holzmehl, wie etwa bei den oben erwähnten MDF- und HDF-Platten.

Unabhängig von der Art des Span- bzw. Fasermaterials ist den (unterschiedlichen) Verfahren zur Herstellung von Pressstoff-Formkörpern gemeinsam, dass mit einer Klebstoffformulierung versehenes Span- bzw. Fasermaterial unter Druck und gegebenenfalls Erhitzung in Form gepresst wird.

Klebstoffformulierungen für diese genannten Anwendungen sind grundsätzlich bekannt, wobei diese bekannten Klebstoffformulierungen allerdings je nach Art des herzustellenden Formkörpers bzw. der Platte, und damit abhängig von der jeweils anzuwendenden Verfahrensführung angepasst werden müssen. Zum Teil werden für unterschiedliche Verfahrensführungen sogar chemisch gänzlich unterschiedliche Klebstoffformulierungen verwendet. So werden bei der Herstellung von sogenannten Faserplatten vorrangig Harnstoff-FormaldehydHarze, sogenannte UF-Harze, und in geringerer Menge auch Isocyanat-basierte Harze angewendet, während zum Fügen bzw. Verkleben von Furnierschichten in erster Linie Phenolharze verwendet werden. Diese Notwendigkeit zur Anpassung einer Klebstoffformulierung an eine bestimmte Verfahrungsführung und/oder ein Produkt kann sich dabei nachteilig auf die Wirtschaftlichkeit auswirken.

Den heute bei Verfahren zur Herstellung von Pressstoff-Formkörpern vorrangig verwendeten Klebstoffformulierungen ist außerdem gemein, dass es vor allem im Zuge der Aushärtung zur Freisetzung von Schadstoffen kommt. Als Beispiele für solche Schadstoffe sind unter anderem Formaldehyd und flüchtige Bestandteile und Zersetzungsprodukte von Isocyanat-basierten Formulierungen zu nennen. Zwar wurden bereits Bestrebungen unternommen, die Menge an freisetzbaren Schadstoffen bei den überwiegend verwendeten Klebstoffformulierungen zumindest zu senken, jedoch treten bei solchen schadstoffärmeren Formulierungen oftmals andere Probleme, insbesondere verfahrenstechnischer Natur auf.

Zum Beispiel muss bei der Herstellung von Pressstoff-Formstücken eine ausreichend kurze Bearbeitungszeit gegeben sein, um ein Verfahren wirtschaftlich betreiben zu können. Daher wird bei den heute überwiegend eingesetzten Verfahren die Verpressung von Span- bzw. Fasermaterial und Klebstoff bei hohen Temperaturen durchgeführt. Die Herstellung von Span- bzw. Faser-Platten erfolgt typischerweise bei Temperaturen von 200 °C bis 250 °C. Diese hohen Temperaturen sind vor allem deshalb nötig, um auch eine ausreichende, möglichst vollständige Aushärtung im Kern der Press-Mischungen zu erzielen, da ein Beheizen, zum Beispiel eines Presskuchens aus Span- bzw. Fasermaterial und Klebstoff von den Seiten erfolgt, und die Wärme in den inneren Kern geleitet werden muss. Diese hohen Temperaturen führen allerdings bei heute verwendeten Klebstoffformulierungen, inklusive der schadstoffreduzierten Varianten, oftmals zu Beschädigungen eines Formkörpers, wie etwa einem Zerreißen des Formkörpers, und können damit eine hohe Ausschussquote verursachen.

JP H06 172733 A offenbart eine chemisch härtbare, wässrige 2-Komponenten-Klebstoffzusammensetzung basierend auf einer Harz-Komponente und einer Härter-Komponente. Die in JP H06 172733 A offenbare Harz-Komponente umfasst eine wässrige Emulsion mit einem mit Epoxid-Gruppen funktionalisierten Acrylat-Polymer sowie ein Netzmittel. Die Härter-Komponente von JP H06 172733 A umfasst eine wässrige Phase mit Hexamethylentetramin als Härter sowie einen niedermolekularen Alkohol, insbesondere Methanol, und einen Verdicker.

JP 2004 231814 A offenbart eine wässrige Klebstoffzusammensetzung zum Fügen von Holzwerkstoffen. Die Klebstoffzusammensetzung umfasst eine wässrige Lösung von Tannin, extrahiert aus Holz, sowie eine polyfunktionelle Epoxidverbindung und ein tertiäres Amin zum Vernetzen des Tannins. Die in JP 2004 231814 A offenbarte Klebstoffzusammensetzung ist frei von Formaldehyd und weist eine gute Wasserresistenz auf.

Aufgabe der vorliegenden Erfindung war es, die Nachteile des Standes der Technik zu überwinden und eine Klebstoffformulierung zur Verfügung zu stellen, mittels welcher eine möglichst prozesssichere Herstellung von Pressstoffkörpern unter Vermeidung großer Ausschussmengen sowie eine schadstoffreduzierte Verfahrensführung erzielbar sind, und welche gleichzeitig möglichst universell bei unterschiedlichen Herstellungsmethoden für Pressstoff-Formkörper einsetzbar ist. Weiters war es Aufgabe der Erfindung Verfahren zur Herstellung von Pressstoff-Formkörpern unter Verwendung einer solchen Klebstoffformulierung bereitzustellen.

Diese Aufgabe wird einerseits durch eine chemisch härtbare, wässrige 2-Komponenten-Klebstoffformulierung zur Herstellung von Pressstoff-Formkörpern, insbesondere Pressstoff-Platten, durch kontinuierliches oder diskontinuierliches Verpressen von Gemengen aus der Klebstoffformulierung und Span- bzw. Fasermaterial oder durch Verpressen von Schichtungen aus der Klebstoffformulierung und Faserstoff-Platten gelöst.

Die chemisch härtbare, wässrige 2-Komponenten-Klebstoffformulierung umfasst eine erste wässrige Komponente A, welche zumindest ein chemisch härtbares Reaktivharz aufweist. Des Weiteren umfasst die chemisch härtbare, wässrige 2-Komponenten-Klebstoffformulierung eine zweite wässrige Komponente B, welche zumindest einen Härter für das chemisch härtbare Reaktivharz der Komponente A aufweist. Die Komponenten A und B sind hierbei zur Bildung der chemisch härtbaren 2-Komponenten-Klebstoffformulierung durch Mischen der Komponenten A und B vorgesehen. In anderen Worten ausgedrückt ist die härtbare 2-Komponenten-Klebsstoffformulierung durch eine Mischung der beiden Komponenten A und B gebildet bzw. wird die härtbare 2-Komponenten-Klebsstoffformulierung durch Mischen der beiden Komponenten A und B gebildet. Ein Mischen der Komponenten A und B kann vorzugsweise unmittelbar vor der Anwendung, also unmittelbar vor dem Beleimen des Span- bzw. Fasermaterials bzw. vor dem Beleimen der Span- bzw. Faserstoff-Platten erfolgen, wie dies nachfolgend noch näher beschrieben wird.

Die Komponente A umfasst 20 Gew.% bis 100 Gew.% einer wässrigen Phase eines mit funktionellen Epoxid-Gruppen funktionalisierten Reaktivharzes oder einer Mischung aus mit funktionellen Epoxid-Gruppen funktionalisierten Reaktivharzen, mit einem Harzgehalt von 30 Gew.% bis 70 Gew.. Die Komponente B umfasst 30 Gew.% bis 100 Gew.% einer wässrige Phase eines funktionelle Amin-Gruppen aufweisenden Härters oder einer Mischung aus funktionelle Amin-Gruppen aufweisenden Härtern, mit einem Härter-Gehalt von 30 Gew.% bis 70 Gew.%.

Vorzugsweise kann die Komponente A 30 Gew.% bis 100 Gew.%, insbesondere 40 Gew.% bis 100 Gew.% der wässrigen Phase mit funktionellen Epoxid-Gruppen funktionalisierten Reaktivharzes oder der Mischung aus mit funktionellen Epoxid-Gruppen funktionalisierten Reaktivharzen umfassen. Bevorzugt kann der Harzgehalt der wässrigen Phase der Komponente A von 40 Gew.% bis 65 Gew.%, insbesondere 40 Gew.% bis 60 Gew.% betragen.

Die Komponente B kann bevorzugt 35 Gew.% bis 100 Gew.%, insbesondere 40 Gew.% bis 100 Gew.% der wässrigen Phase des funktionelle Amin-Gruppen aufweisenden Härters oder der Mischung aus funktionelle Amin-Gruppen aufweisenden Härtern umfassen. Vorzugsweise kann die wässrige Phase der Komponente B einen Härter-Gehalt von 40 Gew.% bis 65 Gew.%, insbesondere 40 Gew.% bis 60 Gew.% aufweisen.

Die wässrige 2-Komponenten-Klebstoffformulierung besteht hierbei aus 20 Gew.% bis 80 Gew.% der Komponente A und 20 Gew.% bis 80 Gew.% der Komponente B. In anderen Worten ausgedrückt wird bzw. ist die 2-Komponenten-Klebstoffformulierung durch Mischen von 20 Gew.% bis 80 Gew.% der Komponente A und 20 Gew.% bis 80 Gew.% der Komponente B gebildet. Im Speziellen kann die 2-Komponenten-Klebstoffformulierung aus 30 Gew.% bis 70 Gew.% der Komponente A und 30 Gew.% bis 70 Gew.% der Komponente B bestehen.

Unter einer wässrigen Phase der Komponenten A und B ist jeweils je nach Art der verwendeten Reaktivsubstanzen, also je nach Reaktivharz und Härter, eine wässrige Dispersion und/oder eine wässrige Suspension und/oder eine wässrige Emulsion und/oder eine wässrige Lösung dieser Reaktivsubstanzen zu verstehen. Der verbleibende Rest in Gew.%, also auf 100 Gew% einer wässrigen Phase kann hierbei zumindest überwiegend durch Wasser gebildet sein. Die wässrigen Phasen der Komponenten A und B können jedoch auch weitere Bestandteile aufweisen, wie zum Beispiel Dispersionshilfsstoffe und/oder Suspensionshilfsstoffe bzw. -stabilisatoren, Emulgatoren, Entschäumungsmittel und Dergleichen.

Außerdem können die Komponenten A und B noch andere Bestandteile bzw. Substanzen bzw. Additive, wie etwa Pigment(e), abseits den angegeben wässrigen Phasen umfassen. Beispiele für bevorzugte Additive, welche Komponente A und/oder Komponente B umfassen können, werden im Folgenden noch näher erläutert. Insofern Komponente A und/oder Komponente B noch weitere Bestandteile, insbesondere Additive umfassen, ist vom Fachmann natürlich entsprechend ein Anteil von weniger als 100 Gew.% an wässriger Phase Reaktivharz(e) respektive Härter für die betroffene Komponente (A oder B) aus dem angegebenen Gew.%-Bereichen zu wählen. Falls die Komponente A und/oder die Komponente B weitere Additive umfassen ist gegebenenfalls auch das Gew.%-Verhältnis von Komponente A zu Komponente B im Rahmen der angegebenen Gew.%-Bereiche anzupassen.

Die Klebstoffformulierung bzw. 2-Komponenten-Klebstofformulierung kann auch als Leimformulierung, Leimungsmittel bzw. wie im Fachjargon des betreffenden technischen Gebiets üblich auch als Leimflotte bezeichnet werden. Insbesondere kann die 2-Komponenten-Klebstoffformulierung zur Herstellung von Spanplatten, Faserplatten und Schichtplattenstrukturen, wie etwa Furnierschichtholz-Platten vorgesehen sein.

Die 2-Komponenten-Klebstoffformulierung mit den angegebenen Merkmalen zeichnet sich zum einen dadurch aus, dass sie ohne Schadstofffreisetzung einsetzbar ist. Wie Versuche gezeigt haben tritt bei der angegeben Klebstoffformulierung insbesondere keine Freisetzung von Formaldehyd und Isocyanat bei der Aushärtung der Klebstoffformulierung im Zuge der Herstellung von Pressstoff-Formkörpern ein. Dadurch kann zum Beispiel bei Verwendung von primär auf Holzfasern basiertem Fasermaterial die Freisetzung von Formaldehyd im Vergleich zu herkömmlichen Klebstoffformulierungen wenigstens auf jene Menge an Formaldehyd beschränkt bzw. reduziert werden, welche aus dem Holzfasermaterial selbst freigesetzt wird. Dies bedeutet in weiterer Folge Vorteile hinsichtlich der Emission von Schadstoffen während der Herstellung der Pressstoff-Formkörper bzw. -platten und damit zum Beispiel eine wesentliche Verbesserung der Arbeitsbedingungen.

Überaschenderweise hat sich außerdem gezeigt, dass die angegebene 2-Komponenten-Klebstoffformulierung in der angegebenen Zusammensetzung im technischen Bereich der Pressstoff-Formkörperherstellung ohne das Erfordernis wesentlicher Anpassungen universell einsetzbar ist. So können mittels der 2-Komponenten-Klebstoffformulierung beispielsweise sowohl Span-, MDF, HDF-, OSB- und Furnierschicht-Platten hergestellt werden, bzw. die entsprechenden Herstellungsverfahren mittels der 2-Komponeten-Klebstofformulierung durchgeführt werden.

Zudem hat sich erwiesen, dass bei Verwendung der 2-Komponenten-Klebstoffformulierung eine Temperatur während des Verpress-Vorgangs im Vergleich zu den herkömmlichen Klebstoffformulierungen gemäß dem Stand der Technik deutlich gesenkt werden kann. So konnte in Versuchen eine Temperatur während des Pressvorgangs bei Einsatz der 2-Komponenten-Klebstoffformulierung zum Beispiel im Falle der Herstellung von MDF-Platten auf ca. 160 °C oder weniger reduziert werden. Dies im Vergleich zu den üblicherweise bei Verwendung herkömmlicher Klebstoffformulierungen erforderlichen Temperaturen von über 200 °C. Ganz grundsätzlich ist hiermit auch eine Senkung der Energiekosten, und damit auch eine Senkung der Produktionskosten bereitgestellt.

In diesem Zusammenhang hat sich die 2-Komponenten-Klebstoffformulierung außerdem als vorteilhaft hinsichtlich einer ausschussfreien bzw. zumindest ausschussreduzierten Produktion von Pressstoff-Formkörpern erwiesen. Anscheinend ist bei Verwendung der 2-Komponenten-Klebstoffformulierung einerseits eine gute Wärmeleitung von den Außenbereichen zum Beispiel eines Presskuchens aus Fasermaterial und Klebstoffformulierung bereitgestellt, sodass im Zuge eines Verpressens eines solchen Presskuchens in dessen Kernbereich ausreichend hohe Kerntemperaturen für eine möglichst vollständige Aushärtung erzielt werden können. Dies kann unter anderem durch die erzielbaren mechanischen Eigenschaften, wie etwa die mechanische Biegefestigkeit und/oder Querzugfestigkeit von als Platten hergestellten Formkörpern belegt werden, welche deutlich innerhalb bzw. oberhalb der genormten Erfordernisse für eine jeweilige Platte, beispielsweise MDF- oder HDF-Platte, liegen. Andererseits scheint es im Zuge eines Pressvorgangs auch aufgrund der verhältnismäßig geringen Temperaturen, welche für die möglichst vollständige Aushärtung der gegenständlichen Klebstoffformulierung erforderlich sind, kaum zu Beschädigungen im Zuge eines Pressvorgangs kommen, und kann hierdurch verursachter Ausschuss hintangehalten werden.

Bei der 2-Komponenten-Klebstoffformulierung weist die wässrige Phase des mit funktionellen Epoxid-Gruppen funktionalisierten Reaktivharzes oder der Mischung aus mit funktionellen Epoxid-Gruppen funktionalisierten Reaktivharzen der Komponente A ein Epoxid-Äquivalentgewicht von 200 g/mol bis 1500 g/mol auf.

Eine Menge an funktionellen Epoxid-Gruppen in dem angegeben Bereich hat sich als besonders geeignet für die Härtungsreaktion des Reaktivharzes der Komponente A durch den funktionelle Amin-Gruppen aufweisenden Härter der Komponente B erwiesen. Vorzugsweise kann die wässrige Phase des mit funktionellen Epoxid-Gruppen funktionalisierten Reaktivharzes oder der Mischung aus mit funktionellen Epoxid-Gruppen funktionalisierten Reaktivharzen der Komponente A ein Epoxid-Äquivalentgewicht von 450 g/mol bis 1100 g/mol aufweisen.

Die wässrige Phase des funktionelle Amin-Gruppen aufweisenden Härters oder der Mischung aus funktionelle Amin-Gruppen aufweisenden Härtern der Komponente B kann ein Amin-H-aktiv Äquivalentgewicht von 200 g/mol bis 700 g/mol aufweisen. Bevorzugt kann die wässrige Phase des funktionelle Amin-Gruppen aufweisenden Härters oder der Mischung aus funktionelle Amin-Gruppen aufweisenden Härtern der Komponente B ein Amin-H-aktiv Äquivalentgewicht von 250 g/mol bis 600 g/mol aufweisen.

Im Speziellen kann vorgesehen sein, dass ein Verhältnis eines Epoxid-Äquivalentgewichts der wässrigen Phase des mit funktionellen Epoxid-Gruppen funktionalisierten Reaktivharzes oder der Mischung aus mit funktionellen Epoxid-Gruppen funktionalisierten Reaktivharzen der Komponente A zu einem Amin-H-aktiv Äquivalentgewicht der wässrigen Phase des funktionelle Amin-Gruppen aufweisenden Härters oder der Mischung aus funktionelle Amin-Gruppen aufweisenden Härters der Komponente B 3:1 bis 1:2 beträgt.

Ein Verhältnis der Äquivalentgewichte innerhalb des angegebenen Bereiches hat sich als vorteilhaft hinsichtlich der Härtung der 2-Komponenten-Klebstoffformulierung im Zuge eines Pressvorgangs, und damit auch als vorteilhaft hinsichtlich der erzielbaren, mechanischen Eigenschaften der Pressstoff-Formkörper erwiesen.

Wie an sich bekannt kann unter dem Begriff funktionalisiertes Harz ganz allgemein eine chemische Substanz verstanden werden, bei welcher die jeweiligen funktionellen Gruppen, im vorliegenden Fall Epoxid-Gruppen des Reaktivharzes der Komponente A respektive Amin-Gruppen des Härters der Komponente B, auf einem oligomeren oder polymeren Träger bzw. einem Kohlenwasserstoff-Gerüst chemisch gebunden vorliegen. Die Art des Trägers kann im Grunde genommen vielfältiger Natur sein.

Vorzugsweise kann das mit Epoxid-Gruppen funktionalisierte Reaktivharz oder die Mischung aus mit funktionellen Epoxid-Gruppen funktionalisierten Reaktivharzen der Komponente A ausgewählt sein aus einer Gruppe bestehend aus funktionalisierten Acrylat-Harzen, funktionalisierten Styrolacrylat-Harzen, funktionalisierten Acrylsäure-Copolymeren und funktionalisierten (Meth)acrylat-Copolymeren, funktionalisierten Acrylat-Urethan-Copolymeren und funktionalisierten kationischen Polyestern.

Je nach Art des oder der eingesetzten, Epoxid-funktionalisierten Harze bzw. Polymere kann die wässrige Phase der Komponente A beispielsweise als wässrige Dispersion, Suspension oder Emulsion ausgebildet sein, insbesondere im Falle der Verwendung kationischer Systeme kann die wässrige Phase der Komponente A aber auch durch eine wässrige Lösung gebildet sein. Als Beispiel für eine geeignete wässrige Phase der Komponente A kann das Produkt Ancarez^{®} AR555 von Evonik Corporation genannt werden.

Der funktionelle Amin-Gruppen aufweisende Härter oder die Mischung aus funktionelle Amin-Gruppen aufweisenden Härtern der Komponente B können ausgewählt sein aus einer Gruppe bestehend aus funktionalisierten Acrylaten, funktionalisierten Acrylat-Polymeren, funktionalisierten Acrylat-Copolymeren, Polyamin-Addukten, funktionalisierten Acrylat-Urethan-Copolymeren, funktionalisierten Styrol-Acrylat-Harzen und kationischen Epoxyaminaddukten.

Beispielhaft für eine geeignete wässrige Phase der Komponente B wird an dieser Stelle Anquamine^{®} 728 von Evonik Corporation genannt.

Bei einer bevorzugten Ausführungsvariante kann die Komponente A oder die Komponente B 0,1 Gew.% bis 20 Gew.% eines mehrwertigen Alkohols oder mehrerer mehrwertiger Alkohole umfassen.

Durch die Verwendung eines mehrwertigen Alkohols oder mehrerer mehrwertiger Alkohole im angegebenen Gew.%-Bereich kann vor allem eine vorzeitige bzw. zu rasche Aushärtung der 2-Komponenten-Klebstofformulierung nach Mischung der Komponenten im Bedarfsfall wirksam hintangehalten bzw. verzögert werden. Ein mehrwertiger Alkohol wirkt bei den angegeben Reaktivharz(en) bzw. Härter(n) der 2-Komponenten-Klebstofformulierung als Reaktionsverzögerer. So kann die nötige Vermischung mit dem Span- bzw. Fasermaterial und/oder die Beschichtung von Fasermaterial umfassenden Platten durchgeführt werden, ohne dass ein großes Risiko einer zu schnellen Aushärtung besteht. Dieses Merkmal ist vor allem bei Verfahrensführungen sinnvoll, bei welchen zum Beispiel ein Mischen der 2-Komponenten-Klebstoffformulierung mit dem Span- bzw. Fasermaterial bei erhöhter Temperatur durchgeführt wird, wie etwa in einer sogenannten Blowline. Als besonders zweckmäßig hat sich erwiesen, wenn die Komponente A oder die Komponente B 1 Gew.% bis 17 Gew.% eines mehrwertigen Alkohols oder mehrerer mehrwertiger Alkohole umfasst. Als mehrwertige Alkohole können zum Beispiel Glycole wie etwa Butyldiglycol verwendet werden.

Die Komponenten A und B können jeweils einen pH-Wert von 7 bis 10 aufweisen.

In diesem Zusammenhang ist es sinnvoll, dass im Falle der Verwendung eines mehrwertigen Alkohols als Reaktionsverzögerer bei einem Zusetzen des mehrwertigen Alkohols zur der Bildung der betreffenden Komponente darauf zu achten, dass ein pH-Wert des mehrwertigen Alkohols vor dem Beimengen zur betreffenden Komponente auf einen dem pH-Wert der betreffenden Komponente zumindest weitestgehend entsprechenden pH-Wert eingestellt wird, zum Beispiel also auf einen pH-Wert von 7 bis 10. Durch diese Maßnahme kann vor allem ein unerwünschtes Ausflocken von Bestandteilen der Komponente A oder Komponente B hintangehalten werden.

Bei einer Weiterbildung kann die Komponente A oder die Komponente B der 2-Komponenten-Klebstoffformulierung 0,2 Gew.% bis 10 Gew.% eines anionischen oder neutralen Wachs, oder einer Mischung aus entsprechenden Wachsen umfassen.

Hierdurch kann vor allem die Beleimung von Span- bzw. Fasermaterial, also das Mischen mit dem Fasermaterial, respektive das Beschichten von Span- bzw. Fasermaterial-Platten verbessert werden. Vorzugsweise kann die Komponente A oder die Komponente B der 2-Komponenten-Klebstoffformulierung 1 Gew.% bis 6 Gew.% eines anionischen oder neutralen Wachs, oder einer Mischung aus entsprechenden Wachsen umfassen. Als Wachs bzw. Wachsmischung ist zum Beispiel das Produkt Hydrowax A 18 der Firma Sasol geeignet.

Alternativ zu einem oder mehreren Wachsen als Bestandteil der Komponente A oder B kann wie unten anhand des Verfahrens zur Herstellung eines Pressstoff-Formkörpers noch näher beschrieben, auch eine Zugabe eines Feststoffwachses im Zuge der Beleimung des Span- bzw. Fasermaterials mit der Klebstoffformulierung erfolgen.

Bei einer weiteren Ausführungsform der 2-Komponenten-Klebstoffformulierung kann vorgesehen sein, dass die Komponente A oder die Komponente B 0,1 Gew.% bis 50 Gew.% eines Füllstoffes oder mehrerer Füllstoffe und/oder Pigmente(s) umfasst.

Durch einen Füllstoff und/oder ein Pigment können letztlich die mechanischen Eigenschaften und/oder eine Farbgebung des Pressstoff-Formkörpers beeinflusst werden.

Weiters kann es zweckmäßig sein, wenn die Komponente A oder die Komponente B der 2-Komponenten-Klebstoffformulierung 0,1 Gew. % bis 12 Gew.% eines Netzmittels oder mehrerer Netzmittel bzw. Tenside umfasst.

Durch dieses Merkmal kann insbesondere eine Verbesserung der Handhabung der wässrigen Phasen der Komponenten und eine Verbesserung der Haftungseigenschaften der 2-Komponenten-Klebstoffformulierung erzielt werden. Ein geeignetes Netzmittel ist zum Beispiel Disperbyk 190 von Byk.

Des Weiteren kann vorgesehen sein, dass die Komponente A oder die Komponente B 0,1 Gew.% bis 15 Gew.% eines Entschäumers oder mehrerer Entschäumer umfasst.

Dieses Merkmal kann sich vor allem vorteilhaft auf den Pressvorgang im Zuge der Herstellung von Pressstoff-Formkörpern auswirken, zum Beispiel um Blasenbildung hintanzuhalten. Als geeignete Entschäumer können zum Beispiel Surfynol 420 oder Surfynol DF 75 von Evonik Corporation genannt werden.

Die Komponente A oder die Komponente B der 2-Komponenten-Klebstoffformulierung kann außerdem 0,1 Gew.% bis 15 Gew.% eines Verdickers oder mehrerer Verdicker umfassen.

Als Beispiel für geeignete Verdicker seien Rheolate 310 D von Elementis und/oder Acrysol RM 8 W von Dow genannt. Durch solche Verdicker kann die Rheologie und können somit vor allem die Verarbeitungseigenschaften der 2-Komponenten-Klebstoffformulierung beeinflusst bzw. an Erfordernisse angepasst werden. Im Speziellen sind Klebstoffformulierungen aufweisend einen Verdicker besonders gut zur Herstellung von Beschichtungen wie etwa durch Walz-Auftrag geeignet.

Die Aufgabe der Erfindung wird auch durch ein erstes Verfahren zur Herstellung von Pressstoff-Formkörpern, insbesondere Pressstoff-Platten gelöst.

Das Verfahren umfasst die Schritte
- Bereitstellung eines Span- bzw. Fasermaterials oder einer Span- bzw. Fasermaterialmischung,
- Bereitstellung einer chemisch härtbaren Klebstoffformulierung,
- Mischen des Span- bzw. Fasermaterials oder der Span- bzw. Fasermaterialmischung mit der Klebstoffformulierung unter Bildung eines Presskuchens
- und kontinuierliche Verpressung des Presskuchens unter Aushärtung der Klebstoffformulierung, oder Herstellung von Presskuchenstücken und diskontinuierliche Verpressung der Presskuchenstücke in Pressformen unter Aushärtung der Klebstoffformulierung.

Wesentlich bei dem Verfahren ist, dass als Klebstoffformulierung eine chemisch härtbare, wässrige 2-Komponenten-Klebstoffformulierung wie in Anspruch 13 definiert eingesetzt wird. Der Presskuchen oder die Presskuchenstücke weisen hierbei einen Gewichtsanteil an Span- bzw. Fasermaterial oder Span- bzw. Fasermaterialmischung von 77 Gew.% bis 98,5 Gew.% und einen Gewichtsanteil an Klebstoffformulierung von 1 Gew.% bis 20 Gew.% auf.

Die durch ein solches Verfahren unter Einsatz der angegebenen 2-Komponenten-Klebstoffformulierung erzielbaren Vorteile wurden bereits in Zusammenhang mit der obenstehenden Beschreibung der 2-Komponenten-Klebstoffformulierung erläutert. Bei dem Verfahren kann die 2-Komponenten-Klebstoffformulierung durch Zusammenführen der beiden Komponenten A und B gebildet werden Ein Zusammenführen bzw. Mischen der beiden Komponenten kann vor dem Schritt oder auch im Zuge des Schrittes des Mischens des Span- bzw. Fasermaterials oder der Span- bzw. Fasermaterialmischung mit der Klebstoffformulierung unter Bildung des Presskuchens erfolgen.

Unter Span- bzw. Fasermaterial wird ein Material verstanden, welches Fasern, wie etwa Holz- bzw. Cellulosefasern, inklusive Fasern aus Altpapier, anderes Recycling-Material wie Abfälle aus Sägewerken oder recyceltes Bauholz, andere natürlich vorkommende Fasern, wie etwa Stroh, Bambus etc., aber auch synthetische Fasern, etwa Polyesterfasern, aufweist. Das Span- bzw. Fasermaterial und/oder die Span- bzw. Fasermaterialmischung kann hierbei durchaus unterschiedliche Ausgestaltung, insbesondere unterschiedliche Zerkleinerungsgrade aufweisen. Das Span- bzw. Fasermaterial und/oder die Span- bzw. Fasermaterialmischung kann beispielsweise mit unterschiedlichen Mahlgrad bereitgestellt werden, wie etwa mit einem verhältnismäßig geringem Mahlgrad als sogenannter Span wie bei den bekannten Span- oder OSB-Platten, oder mit verhältnismäßig hohem Mahlgrad, wie zum Beispiel als aufgeschlossenes, sogenanntes Holzmehl, wie etwa bei den bekannten MDF- und HDF-Platten.

Bei einer Weiterbildung des Verfahrens kann vorgesehen sein, dass im Zuge des Mischens des Span- bzw. Fasermaterials oder der Span- bzw. Fasermaterialmischung mit der Klebstoffformulierung 0,1 Gew.% bis 3 Gew.% eines Festwachses beigemengt werden.

Hierdurch kann vor allem das Beleimen des Span- bzw. Fasermaterials oder der Span- bzw. Fasermaterialmischung, also das Mischen der Klebstoffformulierung mit dem Span- bzw. Fasermaterial oder der Span- bzw. Fasermaterialmischung verbessert werden.

Schließlich wird die Aufgabe der Erfindung aber auch durch ein weiteres Verfahren zur Herstellung von Pressstoff-Platten gelöst. Dieses weitere Verfahren umfasst die Schritte
- Bereitstellung einer Mehrzahl an Span- bzw. Fasermaterial umfassenden Platten,
- Beschichten zumindest einer zur Verbindung mit einer anderen Platte vorgesehenen Oberfläche der Platten mit einer Klebstoffformulierung,
- Schichten der beschichteten Platten zu einer Plattenschichtung,
- Verpressung der Plattenschichtung in der Pressform unter Aushärtung der Klebstoffformulierung.

Wesentlich bei diesem weiteren Verfahren ist wiederum, dass als Klebstoffformulierung eine chemisch härtbare, wässrige 2-Komponenten-Klebstoffformulierung wie in Anspruch 15 definiert eingesetzt wird. Ein Gewichtsanteil an Platten der Plattenschichtung beträgt hierbei von 80 Gew.% bis 99 Gew.% und ein Gewichtsanteil an Klebstoffformulierung der Plattenschichtung beträgt von 1 Gew.% bis 20 Gew.%.

Zum besseren Verständnis der Erfindung wird diese nachfolgend anhand, nicht einschränkender Ausführungsbeispiele und die Verfahren zur Herstellung von Pressstoff-Platten auch anhand von Figuren näher erläutert.

Eine beispielhafte Zusammensetzung einer chemisch härtbaren, wässrigen 2-Komponenten-Klebstofformulierung im Rahmen der Erfindung lautet:
Komponente A:
   Ancarez^{®} AR555; Evonik Corporation; 45,66 Gew.%,
   Butyldiglycol; 5 Gew.%,
   Hydrowax A 18; Sasol; 1 Gew.%;
Komponente B:
   Anquamine^{®} 728; Evonik Corporation; 48,34 Gew.%.

Bei dem angegebenen Ausführungsbeispiel sind die Gew.%-Anteile der einzelnen Bestandteile der 2-Komponenten-Klebstoffformulierung auf 100 Gew.% der 2-Komponenten-Klebstoffformulierung, bestehend aus Komponente A und Komponente B, bezogen. Dementsprechend besteht Komponente A bei dem angegebenen Ausführungsbeispiel, bezogen auf 100 Gew.% der Komponente A, aus 88,38 Gew.% Ancarez^{®} AR555, 9,68 Gew.% Butyldiglycol und 1,94 Gew.% Hydrowax A 18. Komponente B besteht bei dem angegebenen Ausführungsbeispiel zu 100 Gew.% aus Anquamine^{®} 728. Bei dem Ausführungsbeispiel ist die 2-Komponenten-Klebstoffformulierung aus 51,66 Gew.% der Komponente A und 48,34 Gew.% der Komponente B zusammengesetzt.

Ancarez^{®} AR555 ist eine wässrige Phase bzw. Dispersion eines nichtionischen, mit funktionellen Epoxid-Gruppen funktionalisierten Reaktivharzes mit einem Feststoffgehalt von 55 Gew.%, mit einem Epoxid-Äquivalentgewicht von 550 g/mol.

Anquamine^{®} 728 ist eine wässrige Phase eines funktionelle Amin-Gruppen aufweisenden Härters mit einem Feststoffgehalt von ca. 55 Gew.%, mit einem Amin-H-aktiv Äquivalentgewicht von (AHEW) von 250 g/mol.

Die angegebene 2-Komponenten-Klebstoffformulierung hat sich grundsätzlich gut und universell geeignet zu Einsatz für die bekannten Verfahren zur Herstellung von Pressstoff-Formkörpern erwiesen.

Jedoch ist die angegebene 2-Komponenten-Klebstoffformulierung nur als Ausführungsbeispiel anzusehen, und können je nach spezifischen Erfordernissen eines Verfahrens zur Herstellung von Pressstoff-Formkörpern anstelle der oben angegebenen Klebstoffformulierung auch angepasste oder andere Formulierungen bzw. Rezepturen verwendet werden.

So kann beispielsweise das Produkt Ancarez^{®} AR555 durch andere, wässrige Phasen eines mit funktionellen Epoxid-Gruppen funktionalisierten Reaktivharzes oder einer Mischung aus mit funktionellen Epoxid-Gruppen funktionalisierten Reaktivharzen ersetzt und/oder hiermit gemischt werden. Bevorzugt kann das mit Epoxid-Gruppen funktionalisierte Reaktivharz oder die Mischung aus mit funktionellen Epoxid-Gruppen funktionalisierten Reaktivharzen der Komponente A ausgewählt sein aus einer Gruppe bestehend aus funktionalisierten Acrylat-Harzen, funktionalisierten Styrolacrylat-Harzen, funktionalisierten Acrylsäure-Copolymeren und funktionalisierten (Meth)acrylat-Copolymeren, funktionalisierten Acrylat-Urethan-Copolymeren und funktionalisierten kationischen Polyestern.

Ebenso kann das Produkt Anquamine^{®} 728 durch andere wässrige Phasen eines funktionelle Amin-Gruppen aufweisenden Härters oder einer Mischung aus funktionelle Amin-Gruppen aufweisenden Härtern ersetzt oder hiermit gemischt werden. Vorzugsweise kann der funktionelle Amin-Gruppen aufweisende Härter oder die Mischung aus funktionelle Amin-Gruppen aufweisenden Härtern der Komponente B ausgewählt sein aus einer Gruppe bestehend aus funktionalisierten Acrylaten, funktionalisierten Acrylat-Polymeren, funktionalisierten Acrylat-Copolymeren, Polyamin-Addukten, funktionalisierten Acrylat-Urethan-Copolymeren, funktionalisierten Styrol-Acrylat-Harzen und kationischen Epoxyaminaddukten.

Grundsätzlich sind dem Fachmann den im Ausführungsbeispiel genannten Produkten ähnliche Produkte bekannt.

Auch das in dem oben beschriebenen Ausführungsbeispiel angegebene Butyldiglycol kann gegebenenfalls durch einen anderen mehrwertigen Alkohol bzw. Glycol, oder eine Mischung aus mehrwertigen Alkoholen ersetzt werden, oder hiermit gemischt werden. Je nach Art des Herstellungsverfahrens eines Pressstoff-Formkörpers bzw. je nach Verfahrensführung kann ein mehrwertiger Alkohol bzw. eine Mischung aus mehrwertigen Alkoholen als Bestandteil einer der Komponenten A oder B auch gänzlich erübrigt werden. Selbiges gilt auch für das im Ausführungsbeispiel angeführte Hydrowax A 18.

Im Übrigen können jedwede Additive anstelle von Komponente A, wie im obigen Ausführungsbeispiel für Butyldiglycol und Hydrowax A 18 angegeben, genauso der Komponente B beigemengt sein.

Je nach Erfordernis bzw. Verfahrensführung kann es auch zweckmäßig sein, dass Komponente A oder Komponente B der 2-Komponenten-Klebstoffformulierung noch weitere Additive als die oben im Ausführungsbeispiel angegebenen, also Butyldiglycol und Hydrowax A 18, umfassen. So kann die Komponente A oder die Komponente B zum Beispiel 0,1 Gew.% bis 50 Gew.% eines Füllstoffes oder mehrerer Füllstoffe und/oder Pigmente(s), 0,1 Gew. % bis 12 Gew.% eines Netzmittels oder mehrerer Netzmittel, 0,1 Gew.% bis 15 Gew.% eines Entschäumers oder mehrerer Entschäumer und/oder 0,1 Gew.% bis 15 Gew.% eines Verdickers oder mehrerer Verdicker umfassen. Außerdem kann die Komponente A oder die Komponente B 0,1 Gew.% bis 20 Gew.% eines mehrwertigen Alkohols oder mehrerer mehrwertiger Alkohole, sowie 0,2 Gew% bis 10 Gew.% eines anionischen oder neutralen Wachses umfassen.

Je nach Art und Menge von Additiven bzw. je nach allgemeinen Erfordernissen und Verfahrensführung des Verfahrens zur Herstellung von Pressstoff-Formkörpern können die Gew.%-Anteile der Bestandteile der Komponenten A und B der Klebstoffformulierung, also der wässrigen Phasen, mehrwertigen Alkoholen sowie diverser Additive natürlich angepasst werden. Hierbei kann eine jeweilige, entsprechende Anpassung von Gewichtsanteilen der Bestandteile vom Fachmann innerhalb der obenstehend angegebenen Gew.%-Bereiche für die einzelnen Bestandteile vorgenommen werden. Natürlich können die Gewichtsanteile der Komponenten A und B der 2-Komponenten-Klebstoffformulierung relativ zueinander ebenfalls entsprechend innerhalb der angegebenen Gew.%-Bereiche angepasst werden.

Insbesondere umfasst die Komponente A der 2-Komponenten-Klebstofformulierung 20 Gew.% bis 100 Gew.% einer wässrigen Phase eines mit funktionellen Epoxid-Gruppen funktionalisierten Reaktivharzes oder einer Mischung aus mit funktionellen Epoxid-Gruppen funktionalisierten Reaktivharzen, mit einem Harzgehalt von 30 Gew.% bis 70 Gew.%. Weiters umfasst die Komponente B der 2-Komponenten-Klebstoffformulierung 30 Gew.% bis 100 Gew.% einer wässrige Phase eines funktionelle Amin-Gruppen aufweisenden Härters oder einer Mischung aus funktionelle Amin-Gruppen aufweisenden Härtern, mit einem Härter-Gehalt von 30 Gew.% bis 70 Gew. %. Die wässrige 2-Komponenten-Klebstoffformulierung besteht hierbei aus 30 Gew.% bis 70 Gew.% der Komponente A und 30 Gew.% bis 70 Gew.% der Komponente B.

Die wässrige Phase des mit funktionellen Epoxid-Gruppen funktionalisierten Reaktivharzes oder der Mischung aus mit funktionellen Epoxid-Gruppen funktionalisierten Reaktivharzen der Komponente A kann ein Epoxid-Äquivalentgewicht von 200 g/mol bis 1500 g/mol aufweisen. Die wässrige Phase des funktionelle Amin-Gruppen aufweisenden Härters oder der Mischung aus funktionelle Amin-Gruppen aufweisenden Härtern der Komponente B kann ein Amin-H-aktiv Äquivalentgewicht von 200 g/mol bis 700 g/mol aufweisen. Hierbei kann ein Verhältnis eines Epoxid-Äquivalentgewichts der wässrigen Phase des mit funktionellen Epoxid-Gruppen funktionalisierten Reaktivharzes oder der Mischung aus mit funktionellen Epoxid-Gruppen funktionalisierten Reaktivharzen der Komponente A zu einem Amin-H-aktiv Äquivalentgewicht der wässrigen Phase des funktionelle Amin-Gruppen aufweisenden Härters oder der Mischung aus funktionelle Amin-Gruppen aufweisenden Härters der Komponente B 3:1 bis 1:2 betragen.

Des Weiteren können die Komponenten A und B jeweils einen pH-Wert von 7 bis 10 aufweisen.

Im Folgenden werden nun noch Ausführungsbeispiele für Verfahren zur Herstellung von Pressstoff-Platten anhand von Figuren beschrieben. Es zeigen jeweils in stark vereinfachter, schematischer Darstellung:
- Fig. 1: ein Ausführungsbeispiel für einen kontinuierlichen Verpressvorgang eines Presskuchens zu einer Pressstoff-Platte anhand einer Doppelband-Presse;
- Fig. 2: ein Ausführungsbeispiel für einen diskontinuierlicher Verpressvorgang für eine Schichtung aus Fasermaterial umfassenden Platten und Schichten der 2-Komponenten-Klebstoffformulierung.

Ein Verfahren zur Herstellung von Pressstoff-Formkörpern, insbesondere Pressstoff-Platten, umfasst grundsätzlich die Schritte
- Bereitstellung eines Span- bzw. Fasermaterials oder einer Span- bzw. Fasermaterialmischung,
- Bereitstellung einer chemisch härtbaren Klebstoffformulierung,
- Mischen des Span- bzw. Fasermaterials oder der Span- bzw. Fasermaterialmischung mit der Klebstoffformulierung unter Bildung eines Presskuchens
- kontinuierliche Verpressung des Presskuchens unter Aushärtung der Klebstoffformulierung, oder Herstellung von Presskuchenstücken und diskontinuierliche Verpressung der Presskuchenstücke in Pressformen unter Aushärtung der Klebstoffformulierung.

Hierbei kann als Klebstoffformulierung eine chemisch härtbare, wässrige 2-Komponenten-Klebstoffformulierung wie obenstehend beschrieben und in den betreffenden Ansprüchen definiert eingesetzt werden.

Das Mischen des Span- bzw. Fasermaterials oder der Span- bzw. Fasermaterialmischung mit der 2-Komponenten-Klebstoffformulierung, im Fachjargon auch als Beleimen bezeichnet kann wie an sich bekannt auf verschiedene Art und Weise durchgeführt werden. Als die gängigsten Methoden werden an dieser Stelle mechanische Beleimung bzw. Mischung in Mischvorrichtungen, Beleimung mittels einer sogenannten Blowline und die seltenere Trockenbeleimung angeführt. Da diese Beleimungs- bzw. Mischmethoden dem Fachmann bekannt sind, kann eine ausführliche Beschreibung an dieser Stelle erübrigt werden. Hierbei kann alternativ zu dem obenstehend angeführten Ausführungsbeispiel für eine 2-Komponenten-Klebstoffformulierung umfassend ein Wachs (Hydrowax A 18), vorgesehen sein, dass im Zuge des Mischens des Span- bzw. Fasermaterials oder der Span- bzw. Fasermaterialmischung mit der Klebstoffformulierung 0,1 Gew.% bis 3 Gew.% eines Festwachses beigemengt werden.

Die Herstellung der 2-Komponenten-Klebstoffformulierung durch Mischen der Komponenten A und B kann zum Beispiel vor dem Mischen mit dem Span- bzw. Fasermaterial, oder aber auch im Zuge des Mischens mit dem Span- bzw. Fasermaterial erfolgen.

Nach dem bzw. durch das Mischen des Span- bzw. Fasermaterials oder der Span- bzw. Fasermaterialmischung mit der 2-Komponenten-Klebstoffformulierung wird ein sogenannter Presskuchen gebildet bzw. erhalten, welcher anschließend einem Verpressen unterzogen wird.

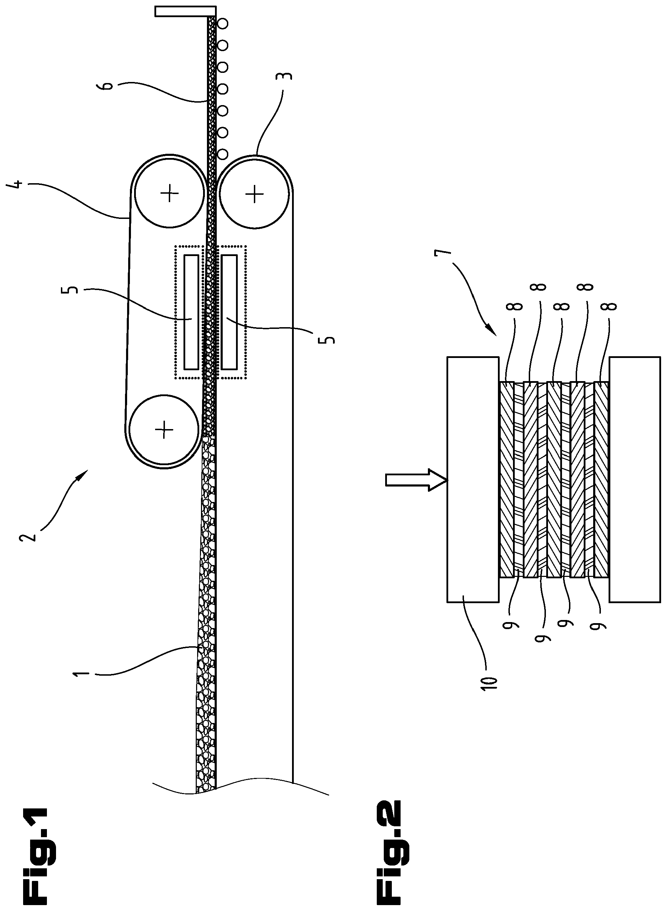

In der Fig. 1 ist ein Ausführungsbeispiel für einen kontinuierlichen Verpressvorgang für einen Presskuchen 1 dargestellt. Ein solcher kontinuierlicher Verpressvorgang des Presskuchens 1 kann wie bei dem in der Fig. 1 dargestellten Ausführungsbeispiel mittels einer Doppelbandpresse 2 bewerkstelligt werden. Die im Ausführungsbeispiel gemäß Fig. 1 dargestellte Doppelbandpresse 2 weist ein sogenanntes Unterband 3, auf welchem der Presskuchen 1 aufgebracht ist und gefördert wird, sowie ein Oberband 4 als Presselement auf. Der Presskuchen 1 wird wie in Fig.1 veranschaulicht zwischen Unterband 3 und Oberband 4 der Doppelbandpresse 2 geführt und kann durch Verstellung von Unterband 3 und Oberband 4 relativ zueinander mit einem jeweils gewünschten Pressdruck verdichtet bzw. verpresst werden. Im Zuge des Verpressens des Presskuchen 1 erfolgt auch die Aushärtung der 2-Komponenten-Klebstoffformulierung, wobei eine Aushärtung der 2 Komponenten-Klebstoffformulierung durch Erhitzen, zum Beispiel mittels in der Fig. 1 veranschaulichter Heizmittel 5, initiiert bzw. beschleunigt werden kann.

In der Fig. 1 ist lediglich ein mögliches Ausführungsbeispiel für ein kontinuierliches Verpressen eines Presskuchens 1 dargestellt, wobei andere, kontinuierlich arbeitende Presssysteme, wie etwa Pressen mit Presswalzen oder Kombinationen aus Bändern und Walzen oder sogenannten Kalanderpressen, wie dies im Bereich der Herstellung von Pressstoff-Formkörpern an sich bekannt und üblich ist. Im Falle eines kontinuierlichen Verpressens wird wie in der Fig. 1 veranschaulicht ein Pressstoff-Strang 6 erhalten, welcher anschließend durch Zerteilen zu Pressstoff-Formkörpern, insbesondere Presstoff-Platten vereinzelt werden kann.

Alternativ zu einem kontinuierlichen Verpressen, wie zum Beispiel anhand des in der Fig. 1 dargestellten Ausführungsbeispiels veranschaulicht, können bei dem Verfahren auch vorab gezielt hergestellte Presskuchenstücke, welche zum Beispiel durch Zerteilen eines kontinuierlich ausgetragenen Presskuchens erhaltbar sind, diskontinuierlich wiederum unter Aushärtung der 2-Komponenten-Klebstoffformulierung zu Pressstoff-Formkörper verpresst werden. Ein solches diskontinuierliches Verpressen kann zum Beispiel in Pressformen mit verstellbaren Pressstempeln durchgeführt werden.

Unabhängig von der Ausführung des Verfahrens mittels kontinuierlicher oder diskontinuierlicher Verpressung eines Presskuchens respektive Presskuchenstücks, weist der Presskuchen oder die Presskuchenstücke einen Gewichtsanteil an Span- bzw. Fasermaterial oder Span- bzw. Fasermaterialmischung von 77 Gew.% bis 98,5 Gew.% und einen Gewichtsanteil an 2-Komponenten-Klebstoffformulierung von 1 Gew.% bis 20 Gew.% auf.

In der Fig. 2 ist Ausführungsbeispiel für ein alternatives Verfahren zur Herstellung von Pressstoff-Formkörpern, insbesondere Pressstoff-Platten stark vereinfacht und grob schematisch dargestellt, bei welchem ebenfalls die erfindungsgemäße 2-Komponenten-Klebstoffformulierung eingesetzt werden kann.

Dieses alternative Verfahren umfasst die Schritte
- Bereitstellung einer Mehrzahl an Span- bzw. Fasermaterial umfassenden Platten, insbesondere Furnier-Schichtstoffplatten,
- Beschichten zumindest einer zur Verbindung mit einer anderen Platte vorgesehenen Oberfläche der Platten mit einer Klebstoffformulierung,
- Schichten der beschichteten Platten zu einer Plattenschichtung,
- Verpressung der Plattenschichtung in der Pressform unter Aushärtung der Klebstoffformulierung.

In der Fig. 2 ist einen entsprechende Plattenschichtung 7 dargestellt, bei welcher alternierend Span- bzw. Fasermaterial umfassende Platten 8 und jeweils eine zwischen zwei Platten 2 angeordnete Schicht der 2-Komponenten-Klebstoffformulierung 9 geschichtet sind. Die in der Fig. 2 grob schematisch veranschaulichte Schichtung 7 kann zum Beispiel mittels eines Pressstempels 10, gegebenenfalls auch in einer in Fig. 2 nicht dargestellten Pressform, verpresst werden. Ein Beschichten bzw. Beleimen der Platten 8 mit der Klebstoffformulierung 9 kann vor dem Verpressen durchgeführt werden, wobei grundsätzlich entweder jeweils eine Oberfläche 11 der Platten oder auch beide Oberflächen 11 zumindest der innenliegenden Platten 8 mit der Klebstoffformulierung 9 beschichtet werden können.

Auch bei der in Fig. 2 veranschaulichten Verfahrensführung durch Verpressen von Plattenschichtungen 7 kann als Klebstoffformulierung eine wie obenstehend beschriebene 2-Komponenten-Klebstoffformulierung 9 eingesetzt werden, wobei ein Gewichtsanteil an Platten der Plattenschichtung von 80 Gew.% bis 99 Gew.% und ein Gewichtsanteil an Klebstoffformulierung der Plattenschichtung von 1 Gew.% bis 20 Gew.% beträgt.

Die Ausführungsbeispiele zeigen mögliche Ausführungsvarianten, wobei an dieser Stelle bemerkt sei, dass die Erfindung nicht auf die speziell angeführten Ausführungsvarianten derselben eingeschränkt ist.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Presskuchen
- 2: Doppelbandpresse
- 3: Unterband
- 4: Oberband
- 5: Heizmittel
- 6: Pressstoff-Strang
- 7: Plattenschichtung
- 8: Platte
- 9: Klebstoffformulierung
- 10: Pressstempel

## Patentansprüche

1. Chemisch härtbare, wässrige 2-Komponenten-Klebstoffformulierung zur Herstellung von Pressstoff-Formkörpern, insbesondere Pressstoff-Platten, durch kontinuierliches oder diskontinuierliches Verpressen von Gemengen aus der Klebstoffformulierung und Span- und/oder Fasermaterial oder durch Verpressen von Schichtungen aus der Klebstoffformulierung und Span- und/oder Faserstoff-Platten, umfassend
- eine erste wässrige Komponente A aufweisend zumindest ein chemisch härtbares Reaktivharz
- und eine zweite wässrige Komponente B aufweisend zumindest einen Härter für das chemisch härtbare Reaktivharz der Komponente A,
wobei die Komponenten A und B zur Bildung der chemisch härtbaren 2-Komponenten-Klebstoffformulierung durch Mischen der Komponenten A und B vorgesehen sind,
wobei die Komponente A 20 Gew.% bis 100 Gew.% einer wässrigen Phase eines mit funktionellen Epoxid-Gruppen funktionalisierten Reaktivharzes oder einer Mischung aus mit funktionellen Epoxid-Gruppen funktionalisierten Reaktivharzen, mit einem Harzgehalt von 30 Gew.% bis 70 Gew.% umfasst,
und wobei die Komponente B 30 Gew.% bis 100 Gew.% einer wässrige Phase eines funktionelle Amin-Gruppen aufweisenden Härters oder einer Mischung aus funktionelle Amin-Gruppen aufweisenden Härtern, mit einem Härter-Gehalt von 30 Gew.% bis 70 Gew. % umfasst,
wobei die wässrige 2-Komponenten-Klebstoffformulierung aus 20 Gew.% bis 80 Gew.% der Komponente A und 20 Gew.% bis 80 Gew.% der Komponente B besteht,
**dadurch gekennzeichnet, dass**
die wässrige Phase des mit funktionellen Epoxid-Gruppen funktionalisierten Reaktivharzes oder der Mischung aus mit funktionellen Epoxid-Gruppen funktionalisierten Reaktivharzen der Komponente A ein Epoxid-Äquivalentgewicht von 200 g/mol bis 1500 g/mol aufweist.

2. Klebstoffformulierung nach Anspruch 1, **dadurch gekennzeichnet, dass** die wässrige Phase des funktionelle Amin-Gruppen aufweisenden Härters oder der Mischung aus funktionelle Amin-Gruppen aufweisenden Härtern der Komponente B ein Amin-H-aktiv Äquivalentgewicht von 200 g/mol bis 700 g/mol aufweist.

3. Klebstoffformulierung nach einem der vorhergehenden Ansprüche, **dadurch gekennzeichnet, dass** ein Verhältnis eines Epoxid-Äquivalentgewichts der wässrigen Phase des mit funktionellen Epoxid-Gruppen funktionalisierten Reaktivharzes oder der Mischung aus mit funktionellen Epoxid-Gruppen funktionalisierten Reaktivharzen der Komponente A zu einem Amin-H-aktiv Äquivalentgewicht der wässrigen Phase des funktionelle Amin-Gruppen aufweisenden Härters oder der Mischung aus funktionelle Amin-Gruppen aufweisenden Härters der Komponente B 3:1 bis 1:2 beträgt.

4. Klebstoffformulierung nach einem der vorhergehenden Ansprüche, **dadurch gekennzeichnet, dass** das mit Epoxid-Gruppen funktionalisierte Reaktivharz oder die Mischung aus mit funktionellen Epoxid-Gruppen funktionalisierten Reaktivharzen der Komponente A ausgewählt sind aus einer Gruppe bestehend aus funktionalisierten Acrylat-Harzen, funktionalisierten Styrolacrylat-Harzen, funktionalisierten Acrylsäure-Copolymeren und funktionalisierten (Meth)acrylat-Copolymeren, funktionalisierten Acrylat-Urethan-Copolymeren und funktionalisierten kationischen Polyestern.

5. Klebstoffformulierung nach einem der vorhergehenden Ansprüche, **dadurch gekennzeichnet, dass** der funktionelle Amin-Gruppen aufweisende Härter oder die Mischung aus funktionelle Amin-Gruppen aufweisenden Härtern der Komponente B ausgewählt sind aus einer Gruppe bestehend aus funktionalisierten Acrylaten, funktionalisierten Acrylat-Polymeren, funktionalisierten Acrylat-Copolymeren, Polyamin-Addukten, funktionalisierten Acrylat-Urethan-Copolymeren, funktionalisierten Styrol-Acrylat-Harzen und kationischen Epoxyaminaddukten.

6. Klebstoffformulierung nach einem der vorhergehenden Ansprüche, **dadurch gekennzeichnet, dass** die Komponente A oder die Komponente B 0,1 Gew.% bis 20 Gew.% eines mehrwertigen Alkohols oder mehrerer mehrwertiger Alkohole umfasst.

7. Klebstoffformulierung nach einem der vorhergehenden Ansprüche, **dadurch gekennzeichnet, dass** die Komponenten A und B jeweils einen pH-Wert von 7 bis 10 aufweisen.

8. Klebstoffformulierung nach einem der vorhergehenden Ansprüche, **dadurch gekennzeichnet, dass** die Komponente A oder die Komponente B 0,2 Gew.% bis 10 Gew.% eines anionischen oder neutralen Wachs, oder einer Mischung aus entsprechenden Wachsen umfasst.

9. Klebstoffformulierung nach einem der vorhergehenden Ansprüche, **dadurch gekennzeichnet, dass** die Komponente A oder die Komponente B 0,1 Gew.% bis 50 Gew.% eines Füllstoffes oder mehrerer Füllstoffe und/oder Pigmente(s) umfasst.

10. Klebstoffformulierung nach einem der vorhergehenden Ansprüche, **dadurch gekennzeichnet, dass** die Komponente A oder die Komponente B 0,1 Gew. % bis 12 Gew.% eines Netzmittels oder mehrerer Netzmittel umfasst.

11. Klebstoffformulierung nach einem der vorhergehenden Ansprüche, **dadurch gekennzeichnet, dass** die Komponente A oder die Komponente B 0,1 Gew.% bis 15 Gew.% eines Entschäumers oder mehrerer Entschäumer umfasst.

12. Klebstoffformulierung nach einem der vorhergehenden Ansprüche, **dadurch gekennzeichnet, dass** die Komponente A oder die Komponente B 0,1 Gew.% bis 15 Gew.% eines Verdickers oder mehrerer Verdicker umfasst.

13. Verfahren zur Herstellung von Pressstoff-Formkörpern, insbesondere Pressstoff-Platten, umfassend die Schritte
- Bereitstellung eines Span- und/oder Fasermaterials oder einer Span- und/oder Fasermaterialmischung,
- Bereitstellung einer chemisch härtbaren Klebstoffformulierung,
- Mischen des Span- und/oder Fasermaterials oder der Span- und/oder Fasermaterialmischung mit der Klebstoffformulierung unter Bildung eines Presskuchens
- kontinuierliche Verpressung des Presskuchens unter Aushärtung der Klebstoffformulierung, oder Herstellung von Presskuchenstücken und diskontinuierliche Verpressung der Presskuchenstücke in Pressformen unter Aushärtung der Klebstoffformulierung,
**dadurch gekennzeichnet, dass**
als Klebstoffformulierung eine chemisch härtbare, wässrige 2-Komponenten-Klebstoffformulierung umfassend
- eine erste wässrige Komponente A aufweisend zumindest ein chemisch härtbares Reaktivharz
- und eine zweite wässrige Komponente B aufweisend zumindest einen Härter für das chemisch härtbare Reaktivharz der Komponente A,
eingesetzt wird,
wobei die Komponenten A und B zur Bildung der chemisch härtbaren 2-Komponenten-Klebstoffformulierung durch Mischen der Komponenten A und B vorgesehen sind,
wobei die Komponente A 20 Gew.% bis 100 Gew.% einer wässrigen Phase eines mit funktionellen Epoxid-Gruppen funktionalisierten Reaktivharzes oder einer Mischung aus mit funktionellen Epoxid-Gruppen funktionalisierten Reaktivharzen, mit einem Harzgehalt von 30 Gew.% bis 70 Gew.% umfasst,
und wobei die Komponente B 30 Gew.% bis 100 Gew.% einer wässrige Phase eines funktionelle Amin-Gruppen aufweisenden Härters oder einer Mischung aus funktionelle Amin-Gruppen aufweisenden Härtern, mit einem Härter-Gehalt von 30 Gew.% bis 70 Gew. % umfasst,
wobei die wässrige 2-Komponenten-Klebstoffformulierung aus 20 Gew.% bis 80 Gew.% der Komponente A und 20 Gew.% bis 80 Gew.% der Komponente B besteht,
und wobei der Presskuchen oder die Presskuchenstücke einen Gewichtsanteil an Span- und/oder Fasermaterial oder Span- und/oder Fasermaterialmischung von 77 Gew.% bis 98,5 Gew.% und einen Gewichtsanteil an Klebstoffformulierung von 1 Gew.% bis 20 Gew.% aufweisen.

14. Verfahren nach Anspruch 13, **dadurch gekennzeichnet, dass** im Zuge des Mischens des Span- und/oder Fasermaterials oder der Span- und/oder Fasermaterialmischung mit der Klebstoffformulierung 0,1 Gew.% bis 3 Gew.% eines Festwachses beigemengt werden.

15. Verfahren zur Herstellung von Pressstoff-Platten, umfassend die Schritte
- Bereitstellung einer Mehrzahl an Span- und/oder Fasermaterial umfassenden Platten,
- Beschichten zumindest einer zur Verbindung mit einer anderen Platte vorgesehenen Oberfläche der Platten mit einer Klebstoffformulierung,
- Schichten der beschichteten Platten zu einer Plattenschichtung,
- Verpressung der Plattenschichtung in der Pressform unter Aushärtung der Klebstoffformulierung,
**dadurch gekennzeichnet, dass**
als Klebstoffformulierung eine chemisch härtbare, wässrige 2-Komponenten-Klebstoffformulierung umfassend
- eine erste wässrige Komponente A aufweisend zumindest ein chemisch härtbares Reaktivharz
- und eine zweite wässrige Komponente B aufweisend zumindest einen Härter für das chemisch härtbare Reaktivharz der Komponente A,
eingesetzt wird,
wobei die Komponenten A und B zur Bildung der chemisch härtbaren 2-Komponenten-Klebstoffformulierung durch Mischen der Komponenten A und B vorgesehen sind,
wobei die Komponente A 20 Gew.% bis 100 Gew.% einer wässrigen Phase eines mit funktionellen Epoxid-Gruppen funktionalisierten Reaktivharzes oder einer Mischung aus mit funktionellen Epoxid-Gruppen funktionalisierten Reaktivharzen, mit einem Harzgehalt von 30 Gew.% bis 70 Gew.% umfasst,
und wobei die Komponente B 30 Gew.% bis 100 Gew.% einer wässrige Phase eines funktionelle Amin-Gruppen aufweisenden Härters oder einer Mischung aus funktionelle Amin-Gruppen aufweisenden Härtern, mit einem Härter-Gehalt von 30 Gew.% bis 70 Gew. % umfasst,
wobei die wässrige 2-Komponenten-Klebstoffformulierung aus 20 Gew.% bis 80 Gew.% der Komponente A und 20 Gew.% bis 80 Gew.% der Komponente B besteht,
und wobei ein Gewichtsanteil an Platten der Plattenschichtung von 80 Gew.% bis 99 Gew.% und ein Gewichtsanteil an Klebstoffformulierung der Plattenschichtung von 1 Gew.% bis 20 Gew.% beträgt.

## Claims

1. A chemically curable, aqueous two-component adhesive formulation for producing pressed material molded bodies, in particular pressed material plates, by continuously or discontinuously pressing mixtures of the adhesive formulation and chip material and/or fiber material, or by pressing layerings of the adhesive formulation and chip material plates and/or fiber material plates, comprising
- a first aqueous component A comprising at least one chemically curable reactive resin
- and a second aqueous component B comprising at least one curing agent for the chemically curable reactive resin of component A,
wherein components A and B are provided for forming the chemically curable two-component adhesive formulation by mixing components A and B,
wherein component A comprises 20 wt. % to 100 wt.% of an aqueous phase of a reactive resin functionalized with functional epoxy groups or a mixture of reactive resins functionalized with functional epoxy groups, with a resin content of 30 wt.% to 70 wt.%,
and wherein component B comprises 30 wt.% to 100 wt.% of an aqueous phase of a curing agent having functional amine groups or a mixture of curing agents having functional amine groups, with a curing agent content of 30 wt.% to 70 wt.%,
wherein the aqueous two-component adhesive formulation consists of 20 wt.% to 80 wt.% of component A and 20 wt.% to 80 wt.% of component B,
**characterized in that**
the aqueous phase of the reactive resin functionalized with functional epoxy groups or the mixture of reactive resins functionalized with functional epoxy groups of component A has an epoxy equivalent weight of 200 g/mol to 1500 g/mol.

2. The adhesive formulation according to claim 1, **characterized in that** the aqueous phase of the curing agent having functional amine groups or the mixture of curing agents having functional amine groups of component B has an amine hydrogen active equivalent weight of 200 g/mol to 700 g/mol.

3. The adhesive formulation according to one of the preceding claims, **characterized in that** a ratio of an epoxy equivalent weight of the aqueous phase of the reactive resin functionalized with functional epoxy groups or of the mixture of reactive resins functionalized with functional epoxy groups of component A to an amine hydrogen active equivalent weight of the aqueous phase of the curing agent having functional amine groups or of the mixture of curing agents having functional amine groups of component B is 3:1 to 1:2.

4. The adhesive formulation according to one of the preceding claims, **characterized in that** the reactive resin functionalized with epoxy groups or the mixture of reactive resins functionalized with functional epoxy groups of component A are selected from a group consisting of functionalized acrylate resins, functionalized styrene acrylate resins, functionalized acrylic acid copolymers and functionalized (meth)acrylate copolymers, functionalized acrylate urethane copolymers and functionalized cationic polyesters.

5. The adhesive formulation according to one of the preceding claims, **characterized in that** the curing agent having functional amine groups or the mixture of curing agents having functional amine groups of component B are selected from a group consisting of functionalized acrylates, functionalized acrylate polymers, functionalized acrylate copolymers, polyamine adducts, functionalized acrylate urethane copolymers, functionalized styrene acrylate resins and cationic epoxy amine adducts.

6. The adhesive formulation according to one of the preceding claims. **characterized in that** component A or component B comprises 0.1 wt.% to 20 wt.% of a polyvalent alcohol or multiple polyvalent alcohols.

7. The adhesive formulation according to one of the preceding claims, **characterized in that** components A and B each have a pH value between 7 and 10.

8. The adhesive formulation according to one of the preceding claims. **characterized in that** component A or component B comprises 0.2 wt.% to 10 wt.% of an anionic or neutral wax or a mixture of corresponding waxes.

9. The adhesive formulation according to one of the preceding claims. **characterized in that** component A or component B comprises 0.1 wt.% to 50 wt.% of a filler or multiple fillers and/or pigment(s).

10. The adhesive formulation according to one of the preceding claims. **characterized in that** component A or component B comprises 0.1 wt.% to 12 wt.% of a wetting agent or multiple wetting agents.

11. The adhesive formulation according to one of the preceding claims. **characterized in that** component A or component B comprises 0.1 wt.% to 15 wt.% of a defoamer or multiple defoamers.

12. The adhesive formulation according to one of the preceding claims. **characterized in that** component A or component B comprises 0.1 wt.% to 15 wt.% of a thickener or multiple thickeners.

13. A method for producing pressed material molded bodies, in particular pressed material plates, comprising the steps of
- providing a chip material and/or fiber material or a chip material and/or fiber material mixture,
- providing a chemically curable adhesive formulation,
- mixing the chip material and/or fiber material or the chip material and/or fiber material mixture with the adhesive formulation, forming a press cake,
- continuous pressing of the press cake, while curing the adhesive formulation, or producing press cake pieces and discontinuous pressing of the press cake pieces in pressing molds, while curing the adhesive formulation,
**characterized in that**
a chemically curable, aqueous two-component adhesive formulation comprising
- a first aqueous component A having at least one chemically curable reactive resin,
- and a second aqueous component B having at least one curing agent for the chemically curable reactive resin of component A,
is used as the adhesive formulation,
wherein components A and B are provided for forming the chemically curable two-component adhesive formulation by mixing components A and B,
wherein component A comprises 20 wt. % to 100 wt.% of an aqueous phase of a reactive resin functionalized with functional epoxy groups or a mixture of reactive resins functionalized with functional epoxy groups, with a resin content of 30 wt.% to 70 wt.%,
and wherein component B comprises 30 wt.% to 100 wt.% of an aqueous phase of a curing agent having functional amine groups or a mixture of curing agents having functional amine groups, with a curing agent content of 30 wt.% to 70 wt.%,
wherein the aqueous two-component adhesive formulation consists of 20 wt.% to 80 wt.% of component A and 20 wt.% to 80 wt.% of component B,
and wherein the press cake or the press cake pieces have a weight proportion of chip material and/or fiber material or chip material and/or fiber material mixture of 77 wt.% to 98.5 wt.% and a weight proportion of adhesive formulation of 1 wt.% to 20 wt.%.

14. The method according to claim 13, **characterized in that**, while mixing the chip material and/or fiber material or the chip material and/or fiber material mixture with the adhesive formulation, 0.1 wt.% to 3 wt.% of a solid wax are admixed.

15. A method for producing pressed material plates, comprising the steps of
- providing a plurality of plates comprising chip material and/or fiber material,
- coating at least one surface of the plates intended for bonding with another plate with an adhesive formulation,
- layering the coated plates to form a plate layering,
- pressing the plate layering in the pressing mold while curing the adhesive formulation,
**characterized in that**
a chemically curable, aqueous two-component adhesive formulation comprising
- a first aqueous component A having at least one chemically curable reactive resin,
- and a second aqueous component B having at least one curing agent for the chemically curable reactive resin of component A,
is used as the adhesive formulation,
wherein components A and B are provided for forming the chemically curable two-component adhesive formulation by mixing components A and B,
wherein component A comprises 20 wt. % to 100 wt.% of an aqueous phase of a reactive resin functionalized with functional epoxy groups or a mixture of reactive resins functionalized with functional epoxy groups, with a resin content of 30 wt.% to 70 wt.%,
and wherein component B comprises 30 wt.% to 100 wt.% of an aqueous phase of a curing agent having functional amine groups or a mixture of curing agents having functional amine groups, with a curing agent content of 30 wt.% to 70 wt.%,
wherein the aqueous two-component adhesive formulation consists of 20 wt.% to 80 wt.% of component A and 20 wt.% to 80 wt.% of component B,
and wherein a weight proportion of plates of the plate layering amounts to 80 wt.% to 99 wt.%, and a weight proportion of adhesive formulation of the plate layering amounts to 1 wt.% to 20 wt.%.

## Revendications

1. Formulation d'adhésif bicomposant aqueuse durcissable chimiquement pour la fabrication de corps moulés en matériau comprimé, plus particulièrement des plaques en matériau comprimé, par pressage continu ou discontinu de mélanges de la formulation d'adhésif et d'aggloméré et/ou de matériau fibreux ou par pressage de superpositions de la formulation d'adhésif et de plaques en aggloméré et/ou en matériau fibreux, comprenant
- un premier composant aqueux A comprenant au moins une résine réactive durcissable chimiquement
- et un deuxième composant aqueux B comprenant au moins un durcisseur pour la résine réactive durcissable chimiquement du composant A,
dans laquelle les composants A et B sont prévus pour la formation de la formulation d'adhésif bicomposant durcissable chimiquement par mélange des composants A et B, dans laquelle le composant A comprend de 20 % en poids à 100 % en poids d'une phase aqueuse d'une résine réactive fonctionnalisée avec des groupes fonctionnels époxydes ou d'un mélange de résines réactives fonctionnalisées avec des groupes fonctionnels époxydes, avec une teneur en résine de 30 % en poids à 70 % en poids,
et dans laquelle le composant B comprend de 30 % en poids à 100 % en poids d'une phase aqueuse d'un durcisseur comprenant des groupes fonctionnels amines ou d'un mélange de durcisseurs comprenant des groupes fonctionnels amines, avec une teneur en durcisseur de 30 % en poids à 70 % en poids,
dans laquelle la formulation d'adhésif bicomposant aqueuse est constituée de 20 % en poids à 80 % en poids de composant A et de 20 % en poids à 80 % en poids de composant B,
**caractérisée en ce que**
la phase aqueuse de la résine réactive fonctionnalisée avec des groupes fonctionnels époxydes ou du mélange de résines réactives fonctionnalisées avec des groupes fonctionnels époxydes du composant A présente un poids équivalent d'époxyde de 200 g/mol à 1 500 g/mol.

2. Formulation d'adhésif selon la revendication 1, **caractérisée en ce que** la phase aqueuse du durcisseur comprenant des groupes fonctionnels amines ou du mélange de durcisseurs comprenant des groupes fonctionnels amines du composant B présente un poids équivalent d'amine de 200 g/mol à 700 g/mol.

3. Formulation d'adhésif selon l'une des revendications précédentes, **caractérisée en ce qu'**un rapport entre un poids équivalent d'époxyde de la phase aqueuse de la résine réactive fonctionnalisée avec des groupes fonctionnels époxydes ou du mélange de résines réactives fonctionnalisées avec des groupes fonctionnels époxydes du composant A et un poids équivalent d'amine-H active de la phase aqueuse du durcisseur comprenant des groupes fonctionnels amines ou du mélange de durcisseur comprenant des groupes fonctionnels amines du composant B est de 3:1 à 1:2.

4. Formulation d'adhésif selon l'une des revendications précédentes, **caractérisée en ce que** la résine réactive fonctionnalisée avec des groupes fonctionnels époxydes ou le mélange de résines réactives fonctionnalisées avec des groupes fonctionnels époxydes du composant A est sélectionné dans un groupe constitué de résines acrylates fonctionnalisées, de résines styrol-acrylates fonctionnalisées, de copolymères d'acide acrylique fonctionnalisés et de copolymères (méth)acrylates fonctionnalisés, de copolymères acrylate-uréthane fonctionnalisés et de polyesters cationiques fonctionnalisés.

5. Formulation d'adhésif selon l'une des revendications précédentes, **caractérisée en ce que** le durcisseur comprenant des groupes fonctionnels amines ou le mélange de durcisseurs comprenant des groupes fonctionnels amines du composant B est sélectionné dans un groupe constitué d'acrylates fonctionnalisés, de polymères d'acrylate fonctionnalisés, de copolymères d'acrylate fonctionnalisés, de produits d'addition de polyamine, de copolymères acrylate-uréthane fonctionnalisés, de copolymères styrol-acrylates fonctionnalisés et de produits d'addition cationiques d'époxy-amine.

6. Formulation d'adhésif selon l'une des revendications précédentes, **caractérisée en ce que** le composant A ou le composant B comprend 0,1 % en poids à 20 % en poids d'un polyalcool ou de plusieurs polyalcools.

7. Formulation d'adhésif selon l'une des revendications précédentes, **caractérisée en ce que** les composants A et B présentent chacun une valeur de pH de 7 à 10.

8. Formulation d'adhésif selon l'une des revendications précédentes, **caractérisée en ce que** le composant A ou le composant B comprend de 0,2 % en poids à 10 % en poids d'une cire anionique ou neutre ou d'un mélange de cires correspondantes.

9. Formulation d'adhésif selon l'une des revendications précédentes, **caractérisée en ce que** le composant A ou le composant B comprend de 0,1 % en poids à 50 % en poids d'une charge ou de plusieurs charges et/ou pigment(s).

10. Formulation d'adhésif selon l'une des revendications précédentes, **caractérisée en ce que** le composant A ou le composant B comprend de 0,1 % en poids à 12 % en poids d'un agent de réticulation ou de plusieurs agents de réticulation.

11. Formulation d'adhésif selon l'une des revendications précédentes, **caractérisée en ce que** le composant A ou le composant B comprend de 0,1 % en poids à 15 % en poids d'un agent anti-mousse ou de plusieurs agents anti-mousse.

12. Formulation d'adhésif selon l'une des revendications précédentes, **caractérisée en ce que** le composant A ou le composant B comprend de 0,1 % en poids à 15 % en poids d'un épaississant ou de plusieurs épaississants.

13. Procédé pour la fabrication de corps moulés en matériau comprimé, plus particulièrement de plaques en matériau comprimé, comprenant les étapes suivantes :
- mise à disposition d'un aggloméré et/ou d'un matériau fibreux ou d'un mélange d'aggloméré et/ou de matériau fibreux,
- mise à disposition d'une formulation d'adhésif durcissable chimiquement,
- mélange de l'aggloméré et/ou du matériau fibreux ou du mélange d'aggloméré et/ou de matériau fibreux avec la formulation d'adhésif en formant un tourteau de presse
- pressage continu du tourteau de presse en durcissant la formulation d'adhésif ou fabrication de morceaux du tourteau de presse et pressage discontinu des morceaux du tourteau de presse dans des moules de pressage en durcissant la formulation d'adhésif,
**caractérisé en ce que**
la formulation d'adhésif utilisée est une formulation d'adhésif bicomposant aqueuse comprenant
- un premier composant aqueux A comprenant au moins une résine réactive durcissable chimiquement
- et un deuxième composant aqueux B comprenant au moins un durcisseur pour la résine réactive durcissable chimiquement du composant A,
dans laquelle les composants A et B sont prévus pour la formation de la formulation d'adhésif bicomposant durcissable chimiquement par mélange des composants A et B, dans laquelle le composant A comprend de 20 % en poids à 100 % en poids d'une phase aqueuse d'une résine réactive fonctionnalisée avec des groupes fonctionnels époxydes ou d'un mélange de résines réactives fonctionnalisées avec des groupes fonctionnels époxydes, avec une teneur en résine de 30 % en poids à 70 % en poids,
et dans laquelle le composant B comprend de 30 % en poids à 100 % en poids d'une phase aqueuse d'un durcisseur comprenant des groupes fonctionnels amines ou d'un mélange de durcisseurs comprenant des groupes fonctionnels amines, avec une teneur en durcisseur de 30 % en poids à 70 % en poids,
dans laquelle la formulation d'adhésif bicomposant aqueuse est constituée de 20 % en poids à 80 % en poids de composant A et de 20 % en poids à 80 % en poids de composant B,
et dans laquelle le tourteau de presse ou les morceaux du tourteau de presse présentent une part en poids d'aggloméré et/ou de matériau fibreux ou de mélange d'aggloméré et/ou de matériau fibreux de 77 % en poids à 98,5 % en poids et une part en poids de formulation d'adhésif de 1 % en poids à 20 % en poids.

14. Procédé selon la revendication 13, **caractérisé en ce que**, au cours du mélange de l'aggloméré et/ou du matériau fibreux ou du mélange d'aggloméré et/ou de matériau fibreux avec la formulation d'adhésif, de 0,1 % en poids à 3 % en poids d'une cire solide est ajouté.

15. Procédé de fabrication de plaques en matériau comprimé, comprenant les étapes suivantes
- mise à disposition d'une pluralité de plaques comprenant de l'aggloméré et/ou du matériau fibreux,
- revêtement d'au moins une surface des plaques, prévue pour la liaison avec une autre plaque, avec une formulation d'adhésif,
- superposition des plaques revêtues afin d'obtenir une superposition de plaques,
- pressage de la superposition de plaques dans le moule de pressage en durcissant la formulation d'adhésif,
**caractérisé en ce que**
la formulation d'adhésif utilisée est une formulation d'adhésif bicomposant aqueuse durcissable chimiquement comprenant
- un premier composant aqueux A comprenant au moins une résine réactive durcissable chimiquement
- et un deuxième composant aqueux B comprenant au moins un durcisseur pour la résine réactive durcissable chimiquement du composant A,
dans laquelle les composants A et B sont prévus pour la formation de la formulation d'adhésif bicomposant durcissable chimiquement par mélange des composants A et B, dans laquelle le composant A comprend de 20 % en poids à 100 % en poids d'une phase aqueuse d'une résine réactive fonctionnalisée avec des groupes fonctionnels époxydes ou d'un mélange de résines réactives fonctionnalisées avec des groupes fonctionnels époxydes, avec une teneur en résine de 30 % en poids à 70 % en poids,
et dans laquelle le composant B comprend de 30 % en poids à 100 % en poids d'une phase aqueuse d'un durcisseur comprenant des groupes fonctionnels amines ou d'un mélange de durcisseurs comprenant des groupes fonctionnels amines, avec une teneur en durcisseur de 30 % en poids à 70 % en poids,
dans laquelle la formulation d'adhésif bicomposant aqueuse est constituée de 20 % en poids à 80 % en poids de composant A et de 20 % en poids à 80 % en poids de composant B,
et dans laquelle une part en poids des plaques de la superposition de plaques représente de 80 % en poids à 99 % en poids et une part en poids de la formulation d'adhésif de la superposition de plaques représente de 1 % en poids à 20 % en poids.
